# EUROPÄISCHE PATENTANMELDUNG

(11) **EP 2 327 846 A2**
(43) Veröffentlichungstag der Anmeldung: **01.06.2011**
(21) Anmeldenummer: 10008665.1
(22) Anmeldetag: 19.08.2010
(51) Int. Cl.: E04F 15/10

(54) **Kunststoff-Bodenplatte**

(30) Priorität: 30.11.2009 DE 102009056079
(71) Anmelder: Stumpf, Kurt, 97616 Bad Neustadt (DE)
(72) Erfinder: Stumpf, Kurt, 97616 Bad Neustadt (DE)
(74) Vertreter: Lenzing, Andreas

(57) **Zusammenfassung**

Die Erfindung betrifft eine Kunststoff-Bodenplatte mit einer quadratischen Grundfläche, die von zwei ersten Längsseiten (1) und zwei zweiten Längsseiten (2) begrenzt ist, sowie mit einer im Betrieb oben angeordneten Oberseite (14), die sich zwischen den Längsseiten (1, 2) erstreckt, und mit Verbindungsmitteln zur Verbindung mehrerer gleichartiger Bodenplatten untereinander, **dadurch gekennzeichnet,** dass die Bodenplatte an ihren Längsseiten (1, 2) bogenförmige Haken (3, 4) und dazu kompatible taschenförmige Ausnehmungen (5, 6) aufweist, wobei die Haken (3, 4) an zwei gegenüber liegenden Längsseiten (1) und die Ausnehmungen (5, 6) an den beiden anderen, sich ebenfalls gegenüber liegenden Längsseiten (2) angeordnet sind.

## Beschreibung

Die vorliegende Erfindung betrifft eine quadratische Kunststoffbodenplatte mit den Merkmalen des Oberbegriffs des Anspruchs 1.

Kunststoffbodenplatten sind als Bodenbeläge für verschieden Anwendungen bekannt. Bei der vorliegenden Erfindung geht es um Bodenplatten, die durch ein Verbindungssystem mit einander verbunden werden können, so dass sich insgesamt ein zusammenhängender Bodenbelag ergibt, der auch bei nicht verklebter Verlegung keine Spalte zwischen den einzelnen Bodenplatten ausbildet. Dabei sollen die mit einander zu einem Boden zusammengefügten Bodenplatten baugleich sein.

Derartige Bodenplatten für die Verlegung auf festen, sehr ebenen Böden (Betonböden) sind bekannt, beispielsweise aus dem US-Patent 4,018,025 und aus der Kanadischen Patentanmeldung CA 2,233,485 A1.

In diesen Druckschriften sind quadratische Bodenplatten dargestellt, die randseitig ein System aus Zapfen und Ausnehmungen aufweisen und die so zusammengefügt werden können. Die Verbindungselemente bewirken dabei nach Art eine Puzzels nur eine Formschluss in Richtung der Verlegeebene. In Vertikalrichtung bleiben die einzelnen Platten gegen einander verschieblich. Diese Bodenplatten sind deshalb nicht für unbefestigte Untergrunde geeignet, beispielsweise für die Verlegung auf Grünflächen. Die einzelnen Elemente könnten sich bei Belastung gegeneinander verschieben und außer Eingriff geraten.

Es sind andere Bodenelemente bekannt, bei denen dieses Problem gelöst ist. Das US-Patent 4,226,064 zeigt beispielsweise ein System von Bodenplatten mit Randseitigen verbindungselementen, die aus Haken und Ausnehmungen bestehen und die in der Vertikalrichtung unter einander greifen. Die benachbarten Platten werden sowohl in der Horizontalen als auch in der Vertikalen mit einander verbunden. Es ist deshalb auch eine Verlegung auf Grünflächen oder sonstigem unbefestigtem Untergrunden möglich, ohne dass die Verbindungen sich aufgrund wechselnder Belastungen läsen.

Bei diesen Bodenplatten ist es nachteilig, dass sie nur in einer bestimmten Reihenfolge verlegt werden können. Bei der Verlegung in einem Raum muss immer in einer bestimmten Ecke des Raums begonnen werden. Entsprechendes Gilt für die Verlegung auf einer Freifläche. Die Verlegung muss so erfolgen, dass die bereits verlegte Bodenlatte an ihren freien Kanten nach oben weisende Haken trägt und dass die nachfolgende, baugleiche Platte mit den zur Unterseite in offenen Ausnehmungen auf diese Haken aufgesetzt wird. Es ist nicht möglich, in einer Raummitte oder in der Mitte eine Fläche zu beginnen und dann zu allen vier Seiten hin quadratische Bodenplatten anzufügen. Ebenso wenig ist es möglich, eine Bodenplatte bei dem zuletzt beschriebenen System mit vertikaler Verbindung zwischen drei bereits verlegte Bodenplatten einzufügen.

Es ist deshalb Aufgabe der vorliegenden Erfindung, eine quadratische Bodenplatte zu schaffen, die mit baugleichen angrenzenden Bodenplatten randseitig zusammengefügt werden kann, wobei die Verbindungselemente eine größere Freiheit bei der Reihenfolge der Verlegung der Bodenplatten erlauben.

Diese Aufgabe wird von einer Bodenplatte mit den Merkmalen des Anspruchs 1 gelöst.

Weil die Bodenplatten an ihren vier gleich langen Längsseiten bogenförmige Haken und dazu kompatible taschenförmige Ausnehmungen aufweisen, wobei die Haken an zwei gegenüber liegenden Längsseiten und die Ausnehmungen an den beiden anderen, sich ebenfalls gegenüber liegenden Längsseiten abgeordnet sind, und weil die Haken abgerundete Flächenelemente aufweisen mit einem Radius, dessen Mittelpunkt im Bereich der benachbarten Längsseite der Platte liegt, können die abgerundeten Haken einer zu verlegenden Platte mit einer Schwenkbewegung unter eine bereits liegende Platte geführt werden und dort in die kompatiblen Ausnehmungen eingreifen. Die Verlegung ist also flexibel, so dass hinzukommende Platten sowohl mit den Aufnehmungen auf die Haken der schon liegenden Platte aufgesetzt werden können, als auch mit ihren Haken unter die Ausnehmungen einer bereits verlegten Platte greifen können.

Eine besonders robuste Ausführungsform sieht vor, dass die Haken an ihren den Ecken der Bodenplatte zugewandten Außenseiten abgeschrägt sind, derart, dass die Breite der Haken von der Längsseite in Richtung eines freien Endes des Hakens verringert.

Weiter kann zur Versteifung der Bodenplatte vorgesehen sein, dass unterhalb der Oberseite zwischen den Längsseiten Rippen verlaufen, die sich in der Höhe von der Oberseite bis zu einer Unterkante erstrecken. Die Belastbarkeit wird weiter verbessert, wenn zwischen den Rippen Diagonalrippen angeordnet sind, die in senkrechter Richtung zu der Oberfläche eine geringere Erstreckung aufweisen als die Rippen. Zusätzlich kann vorgesehen sein, dass die Rippen quadratische Felder begrenzen, in deren Mittelpunkten sich die Diagonalrippen in jeweils einer Hülse treffen.

Für die Verwendung im Freien kann vorgesehen sein, dass die Hülsen zur Oberseite der Bodenplatte hin offen sind, so dass Regenwasser ablaufen kann.

Bei einem besonders einfachen Verfahren zur Herstellung einer Bodenplatte kann der Grundkörper in einem Spritzgussverfahren hergestellt werden, wobei die Hülsen mittels wechselbarer Stifte geformt sind, die in einer ersten Ausführung mit langen Stiften die Hülsen zu der Oberfläche hin offen formen, während in einer ersten Ausführung mit kurzen Stiften die Hülsen zu der Oberfläche hin geschlossen geformt werden. Dies senkt die Werkzeugkosten.

Nachfolgend wird ein Ausführungsbeispiel der vorliegenden Erfindung anhand der Zeichnungen näher beschrieben. Es zeigen:
- Figur 1:: Eine erfindungsgemäße Bodenplatte in einer Ansicht von unten;
- Figur 2:: die Bodenplatten gemäß Figur 1 in einem teilweisen Schnätt entlang der Linie 7 aus Figur 1;
- Figur 3:: zwei perspektivische Ansichten des Eckbereichs der Bodenplatte aus den Figuren 1 und 2, von oben und von unten;
- Figur 4:: einen stark vergrößerten Querschnitt durch einen randseitigen Haken der Bodenplatte; sowie
- Figur 5;: einen vergrößerten Querschnitt durch eine randseitige Ausnehmung der Bodenplatte.

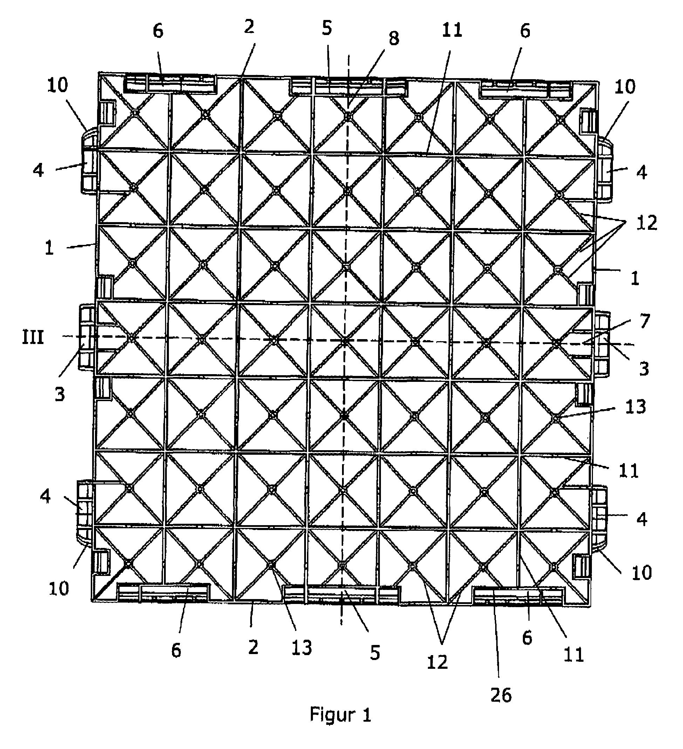

In der Figur 1 ist ein Ausführungsbeispiel einer erfindungsgemäßen Kunststoff-Bodenplatte in einer Ansicht von der Unterseite dargestellt. Die Bodenplatte ist in ihrer Grundform quadratische mit ersten Längsseiten 1 und zweiten Längsseiten 2. Die ersten Längsseiten 1 liegend sich gegenüber, ebenso die zweiten Längsseiten 2. Die Längsseiten 1 tragen jeweils drei Befestigungselemente, die über den Querschnitt des durch die Längsseiten 1 und 2 begrenzten Quadrates hinaus ragen. Die Befestigungselemente umfassen an jeder Längsseite 1 einen mittigen Haken 3 und zwei seitliche Haken 4. Die Längsseiten 2 weisen zu den Haken 3 und 4 kompatible taschenförmige Ausnehmungen auf. Jede Längsseite 2 weist eine mittige Ausnehmung 5 und zwei seitliche Ausnehmungen 6 auf. Die Bodenplatte ist insoweit achsensymmetrische zu einer ersten Symmetrieachse 7, die mittig durch die Längsseiten 1 verläuft, sowie zu einer zweiten Symmetrieachse 8, die die Längsseiten 2 mittig durchsetzt und parallel zu den Längsseiten 1 verläuft. Die beiden Symmetrieachsen 7 und 8 treffen sich im geometrischen Mittelpunkt der Bodenplatte.

Die beiden Haken 3 und die dazu kompatiblen Ausnehmungen 5 sind jeweils mittig auf der sie tragenden Längsseite angeordnet und folglich symmetrisch zu der jeweiligen Symmetrieachse 7 bzw. 8 ausgebildet. Die seitlichen Haken 4 sind mit abgerundeten Außenseiten 10 versehen, die sich an den Seiten der Haken befinden, welche zu den Eckbereichen der Bodenplatte hin weisen. Die genaue Ausbildung der Haken 3 und 4 sowie der Taschen 5 und 6 wird nachfolgend anhand vergrößerter Darstellungen näher beschrieben.

Die Unterseite der Bodenplatte ist weiter mit einer quadratischen Rippenstruktur 11 ausgebildet. Die einzelnen Rippen verlaufen parallel und in einem gleichmäßig verteilten Abstand zu einander zwischen den Seiten 1 und 2. Die Rippen 11 begrenzen kleinere quadratische Felder der Grundfläche der Bodenplatte. Diese Felder sind wiederum durch Diagonalrippen 12 versteift. Die Diagonalrippen 12 verstärken die einzelnen zwischen den Rippen 11 befindlichen quadratischen Oberflächenelemente gegenüber einer von der Oberseite der Bodenplatte her einwirkenden punktuellen Druckbelastung. Im Mittelpunkt jedes einzelnen quadratischen Flächenelementes, also im Kreuzungspunkt der sich kreuzenden Diagonalrippen 12, befindet sich jeweils ein Hülsenelement 13, das mit den Diagonalrippen 12 verbunden ist. Das Hülsenelement 13 dient auch hier zur Versteifung der Diagonalrippen 12 und damit des darüber liegenden, von den Diagonalrippen 12 getragenen Flächenelements. Die Hülsenelemente 13 können je nach Ausführungsform als rohrförmiges Element mit einem zentrischen Sackloch ausgebildet sein, oder eine Durchgangsöffnung aufweisen. Im ersten Fall ist die Oberfläche der Bodenplatte geschlossen, im zweiten Fall weis sie Ablauföffnungen auf, die Flüssigkeit von der Oberseite durch die offenen Hülsenelemente 13 ableiten können.

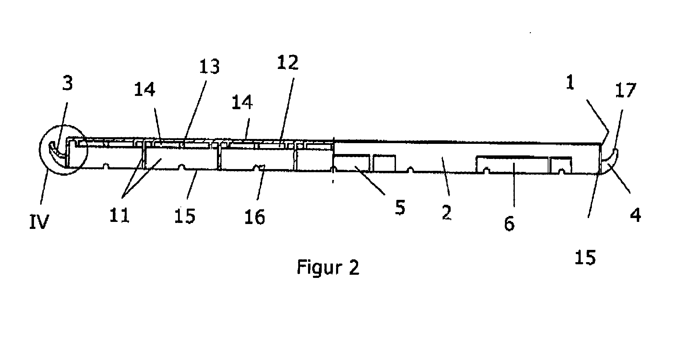

Die Figur 2 zeigt die Bodenplatte aus Figur 1 in einer Stirnansicht in einem Teilquerschnitt entlang der Symmetrieachse 7 aus Figur 1. Die Ansicht entspricht der Draufsicht auf die in Figur 1 oben befindliche Längsseite 2. Gleiche Bauelemente tragen gleiche Bezugsziffern.

Die Rippen 11 erstrecken sich von einer Oberseite 14 der Bodenplatte bis zu einer gemeinsamen unteren Ebene, die im Betrieb die Auflagefläche auf dem Untergrund darstellt. Die Diagoralrippen 12 erheben sich ausgehend von der Oberseite 14 nur über etwa 20 % der Höhe der Rippen 11 und ragen in den von den Rippen 11 begrenzten Innenraum hinein. Eine Unterkante 15 der Rippen 11 weist weiter eine U-förmige Ausnehmung 16 auf, die in der Betriebsstellung den Durchgang von einem Innenraum zu dem benachbarten Innenraum zwischen den Rippen 11 ermöglicht. Eindringendes Regenwasser kann dadurch beispielsweise sich verteilen und abfließen.

Die Haken 3 und 4 weisen in dieser Darstellung eine sichtbare, etwa viertelkreisförmige Gestaltung auf, wobei die Oberseite mit einem kleineren Radius konkav gerundet ist, während die Unterseite mit einem größeren Radius konvex gekrümmt ist. Die Oberseite ist etwa auf halber Höhe der Außenseite der Längswand 1 angesetzt, während die Unterseite der Haken 3 und 4 auf Höhe der Unterkante 15 der Längswand 1 beginnt. Im Querschnitt verjüngen sich die Haken 3 und 4 ausgehend von der Ansatzstelle an die Längswand 1 bis zu einem freien Ende 17 hin. Das freie Ende 17 weist nahezu senkrecht nach oben.

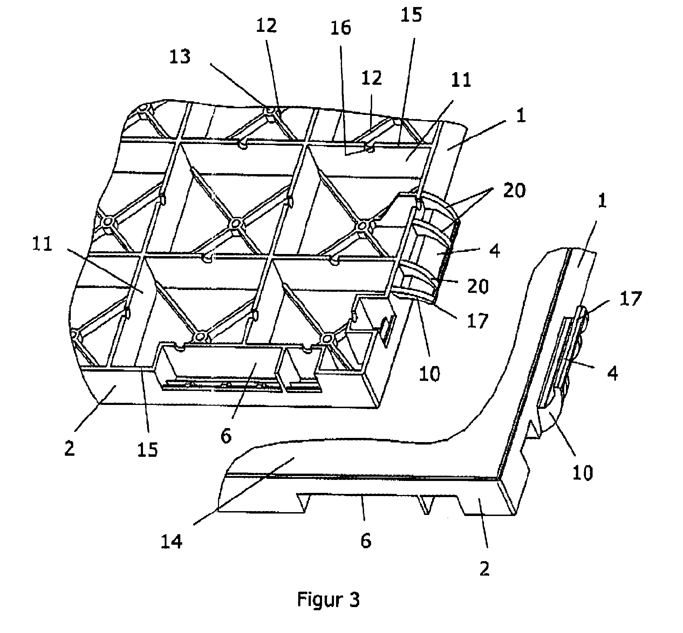

Die Figur 3 veranschaulicht die insoweit beschriebene Gestaltung der Bodenplatte in perspektivischer Form. Dargestellt sind in der Figur 3 links oben eine perspektivische Ansicht auf die Unterseite eines Eckbereiches, sowie in der Figur 3 rechts unten eine perspektivische Draufsicht auf die Oberseite eines Eckbereichs der beschriebenen Bodenplatte. Gleiche Bauelemente tragen wiederum gleiche Bezugsziffern.

In dieser Darstellung ist ebenso wie in der Figur 1 erkennbar, dass der Haken 4 an seiner dem Haken 3 abgewandten Seite, die dem Eckbereich der Bodenplatte zugewandt ist, mit einer Schräg gestellten Seite 10 versehen ist. Die Seite 10 verläuft nicht parallel zu den drei Rippen 20, die den Haken 4 versteifen. Sie verläuft viel mehr ausgehend von der Längsseite 1 schräg auf die nächstbenachbarte Rippe 20 zu und endet in einem geringen Abstand von dieser. Dadurch ist der Haken 4 in seiner Längserstreckung parallel zu der Längsseite 1 an seinem freien Ende 17 gegenüber dem mittig angeordneten Haken 3 verkürzt. Diese Verkürzung des Hakens 4 ermöglichst eine Montage einer Bodenplatte in besonders einfacher weise.

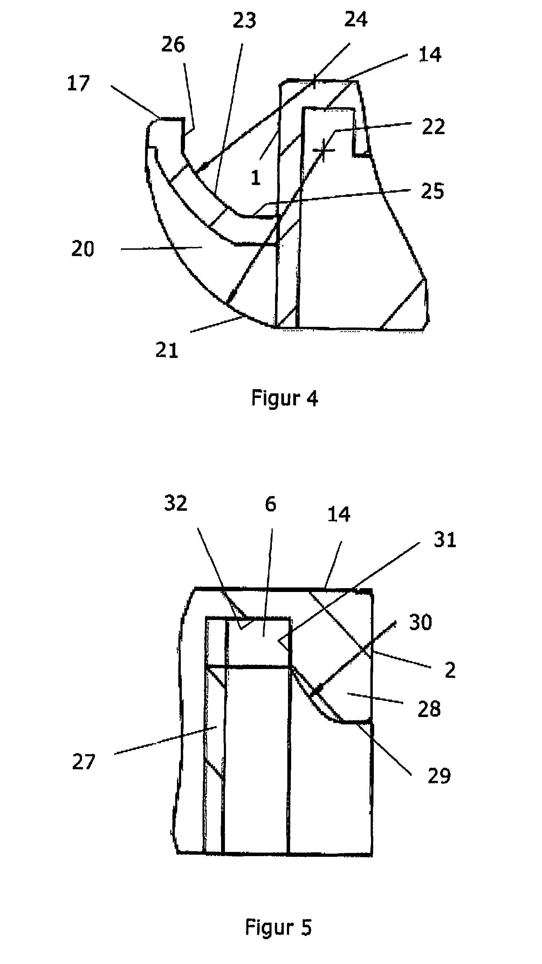

Die Figur 4 zeigt einen Haken 4 in einer stark vergrößerten Querschnittsdarstellung. Es ist ersichtlich, dass die Rippe 20, die die Gestalt des Hakens ausmacht, unterhalb der Mitte in der unteren Hälfte der Längsseite 1 angesetzt ist. Eine untere Seite 21 verläuft mit einem Radius zu der freien Oberkante 17 des Hakens, wobei der Radius etwa einen Mittelpunkt aufweist, der mit 22 bezeichnet ist. Eine obere Oberfläche 23 ist ebenfalls kreisbogenförmig gekrümmt und weist geometrisch etwa einen Mittelpunkt bei 24 auf. Ein horizontaler Obergangsbereich 25 ist zwischen der Oberfläche 23 und der Seitenwand 1 vorgesehen. Ebenso ist ein vertikaler Übergangsbereich 26 zwischen der Oberfläche 23 und der Oberkante 17 vorgesehen.

Die Figur 5 zeigt die zu dem Haken aus Figur 4 kompatible Ausnehmung 6. Die Ausnehmung 6 ist begrenzt durch eine Rückwand 27 und die Oberfläche 14 der Bodenplatte. Ausgehend von der Oberfläche 14 ist eine nach unten weisende Hinterschneidung 28 an der Seitenwand 2 ausgebildet. Eine innere Oberfläche 29 der Hinterschneidung 28 verläuft zunächst etwa senkrecht von der Längswand 2 auf die Rückwand 27 zu und geht dann in einem Radius in eine Schräge 30 über. Anschließend an die Schräge 30 befindet sich ein senkrechter übergangsbereich 31, der letztlich zu der Rückseite der Oberfläche 14 führt, die mit 32 bezeichnet ist.

Zwischen der Rückwand 27, der Fläche 32, der Fläche 31 und der Schräge 30 ergibt sich eine Ausnehmung, in die der freie Bereich des Hakens 4 mit der Oberkante 17, dem bogenförmigen Radius 21, der senkrechten Fläche 27 und der oberen Oberfläche 23 bündig hinein passt.

Beim Verlegen eines Bodenbelages, der aus einer Vielzahl von erfindungsgemäßen Bodenplatten zusammengesetzt wird, kann aufgrund der Gestaltung dieser Bodenplatte wie folgt vorgegangen wercen:
Eine erste Bodenplatte wird an einer beliebigen Stelle im Raum oder auf der Freifläche platziert. Die nächste baugleiche Bodenplatte kann mit den Ausnehmungen 5 und 6 einfach auf die Haken 3 und 4 der Bodenplatte aufgelegt werden. Bei Auflegen in einer ersten Reihe ist dann die freie Stirnseite der zweiten Bodenplatte ebenfalls mit Ausnehmungen versehen. Hier wird eine dritte Bodenplatte mit den Haken 3 und 4 zu der zweiten Bodenplatte angeordnet, wobei die Haken unter die bereits verlegte Bodenplatte gehakt werden müssen. Die bogenförmige Form der Haken und die entsprechende Ausgestaltung der Ausnehmung erlauben das Unterhaken der dritten Bodenplatte unter die zweite Bodenplatte durch Ansetzen in einem Winkel von etwa 45° und nachfolgendes Absenken. Diese Vorgehensweise ist bereits abweichend von der konventionellen Verlegung von Bodenplatten, die auf je zwei an einander angrenzenden Längsseiten gleichartige Verbindungselemente (Zapfen bzw. Ausnehmungen) aufweisen.

Die Ausgestaltung der Haken 4 mit der Verjüngung im Bereich der schrägen Stirnseite 10 erlaubt außerdem das Einlegen einer Platte zwischen drei bereits liegende Platten. Ausgehend von einer Konfiguration, in der eine quadratische Platte in eine U-förmige freie Stelle eines Bodenbelages eingelegt werden muss, haben die beiden Längsseiten des freien Platzes jeweils die Haken dem freien Platz zugewandt, während die von den Längsseiten eingeschlossene Querseite des freien Platzes Ausnehmungen aufweist. Die fehlende Platte kann nun mit den Haken 3 und 4 in die Querseite eingehakt werden, wobei sie in einem Winkel von etwa 45° zur Horizontalen an die Querseite herangeführt wird, bis die Haken 3 und 4 unter die Ausnehmungen 5 und 6 greifen. Die längsseitigen Haken der bereits verlegten Platten weisen nach oben auf die neu hinzukommende Platte zu. Wird die neue Platte abgesenkt, so greifen die Haken 3 und 4 in deren Ausnehmungen 5 und 6 und halten die neue Platte so fest. Das Absenken der neuen Platte auf die Haken wird dadurch ermöglicht, dass der Haken 4 an seiner der Ecke zugewandten Stirnseite 10 verjüngt ist. Diese Verjüngung erlaubt die oben beschriebene Schwenkbewegung.

Eine Verzahnung der Platten in der Fläche ergibt sich daraus, dass jeweils benachbarte Platten immer um 90° gegeneinander gedreht sind, so dass sich entlang einer Linie des Bodenbelags Haken und Ausnehmungen abwechseln. Ein Anheben des Bodens entlang einer Linie, wie es bei herkömmlichen Böden vorkommen kann, ist deshalb ausgeschlossen.

Die Abmessungen der Bodenplatte in diesem Ausführungsbeispiel sind etwa folgende:
Kantenlänge 50cm, Dicke 27 mm, horizontale Ausladung der Haken 15 mm, vertikale Höhe der Haken 22 mm über der Grundfläche.
Als Material kommt spritzgussfähiger Kunststoff in Betracht, vorzugsweise Polypropylen, Polyethylen oder Polyvinylchlorid.

### Bezugszeichen

- 1.: erste Längsseiten
- 2.: zweite Längsseiten
- 3.: mittiger Haken
- 4.: seitliche Haken
- 5.: mittige Ausnehmung
- 6.: seitliche Ausnehmung
- 7.: Symmetrieachse
- 8.: Symmetrieachse
- 9.:
- 10.: Außenseite
- 11.: Rippenstruktur
- 12.: Diagonalrippen
- 13.: Hülsenelement
- 14.: Oberseite
- 15.: Unterkante
- 16.:
- 17.: freies Ende
- 18.:
- 19.:
- 20.: Rippen
- 21.: untere Seite
- 22.: Mittelpunkt
- 23.: obere Oberfläche
- 24.: Mittelpunkt
- 25.: Übergangsbereich
- 26.: Übergangsbereich
- 27.: Rückwand
- 28.: Hinterschneidung
- 29.: innere Oberfläche
- 30.: Schräge
- 31.: senkrechter Übergangsbereich
- 32.: Rückseite

## Patentansprüche

1. Kunststoff-Bodenplatte mit einer quadratischen Grundfläche, die von zwei ersten Längsseiten (1) und zwei zweiten Längsseiten (2) begrenzt ist, sowie mit einer im Betrieb oben angeordneten Oberseite (14), die sich zwischen den Längsseiten (1, 2) erstreckt, und mit Verbindungsmitteln zur Verbindung mehrerer gleichartiger Bodenplatten untereinander, **dadurch gekennzeichnet, dass** die Bodenplatte an ihren Längsseiten (1, 2) bogenförmige Haken (3, 4) und dazu kompatible laschenförmige Ausnehmungen (5, 6) aufweist, wobei die Haken (3, 4) an zwei gegenüber liegenden Längsseiten (1) und die Ausnehmungen (5, 6) an den beiden anderen, sich ebenfalls gegenüber liegenden Längsseiten (2) angeordnet sind.

2. Bodenplatte nach Anspruch 1, **dadurch gekennzeichnet, dass** die Haken (3, 4) abgerundete Flächenelemente (23) mit einem Radius aufweisen, dessen Mittelpunkt (24) im Bereich der benachbarten Längsseite (1) der Platte liegt.

3. Bodenplatte nach einem der vorhergehenden Ansprüche, **dadurch gekennzeichnet, dass** die Haken (3, 4) einer zu verlegenden Platte mit einer Schwenkbewegung unter eine bereits liegende Platte führbar sind und dort in die kompatiblen Ausnehmungen (5, 6) eingreifen.

4. Bodenplatte nach einem der vorhergehenden Ansprüche, **dadurch gekennzeichnet, dass** die Haken (4) an ihren den Ecken der Bodenplatte zugewandten Außenseiten (10) abgeschrägt sind, derart, dass die Breite der Haken von der Längsseite (1) in Richtung eines freien Endes (17) des Hakens (4) verringert.

5. Bodenplatte nach einem der vorhergehenden Ansprüche, **dadurch gekennzeichnet, dass** unterhalb der Oberseite (14) zwischen den Längsseiten (1, 2) Rippen (11) verlaufen, die sich in der Höhe von der Oberseite (14) bis zu einer Unterkante (15) erstrecken.

6. Bodenplatte nach einem der vorhergehenden Ansprüche, **dadurch gekennzeichnet, dass** zwischen den Rippen (11) Diagonalrippen (12) angeordnet sind, die in senkrechter Richtung zu der Oberfläche (14) eine geringere Erstreckung aufweisen als die Rippen (11).

7. Bodenplatte nach einem der vorhergehenden Ansprüche, **dadurch gekennzeichnet, dass** die Rippen (11) quadratische Felder begrenzen, in deren Mittelpunkten sich die Diagonalrippen (12) in jeweils einer Hülse (13) treffen.

8. Bodenplatte nach einem der vorhergehenden Ansprüche, **dadurch gekennzeichnet, dass** die Hülsen (13) zur Oberseite (14) der Bodenplatte hin offen sind.

9. Verfahren zur Herstellung einer Bodenplatte nach einem der vorhergehenden Ansprüche, **dadurch gekennzeichnet, dass** der Grundkörper in einem Spritzgussverfahren hergestellt ist, wobei die Hülsen (13) mittels wechselbarer Stifte hergestellt sind, die in einer ersten Ausführung mit langen Stiften die Hülsen (13) zu der Oberfläche (14) hin offen formen, während in einer ersten Ausführung mit kurzen Stiften die Hülsen (13) zu der Oberfläche (14) hin geschlossen geformt werden.
